# EUROPEAN PATENT APPLICATION

(11) **EP 4 249 152 A1**
(43) Date of publication of application: **27.09.2023**
(21) Application number: 21895223.2
(22) Date of filing: 01.11.2021
(51) Int. Cl.: B22F 9/04, C01G 49/02, B22F 9/22

(54) **METHOD FOR OBTAINING FINE IRON-CONTAINING POWDERS**

(30) Priority: 20.11.2020 RU 2020138046
(71) Applicant: Ferrme Group Limited Liability Company, g. Tyumen, 625000 (RU)
(72) Inventor: MAKSIMOV, Lev Igorevich, Tyumen 625000 (RU)
(74) Representative: Croce, Valeria
(86) International application number: PCT/RU2021/050366
(87) International publication number: WO 2022/108488

(57) **Abstract**

The invention relates to the production of highly dispersed metal-containing powders and can be used to produce powders of iron and its compounds from technogenic waste of groundwater treatment plants, also known as sediments or sludge of wash water filters of iron removal plants. The method for producing highly dispersed iron-containing powders from technogenic waste of groundwater treatment plants consists of the following successive stages:
- dispersion of wash water sludge by treatment that ensures an equivalent particle diameter of not more than 100 microns for at least 90% of particles of the total number of particles.
- dehydration of wash water sludge from groundwater treatment plants to a relative humidity of not more than 90%;
- loading or in-line feeding of wash water sludge from groundwater treatment plants to a reaction chamber or reactor;
- reduction of iron compounds contained in wash water sludge from groundwater treatment plants in a reaction chamber or reactor in a gaseous environment having a reduction potential and consisting of at least 95% of a mixture of carbon monoxide and carbon dioxide and at 300 to 900 degrees Celsius;
- separation of particles of the target product iron compounds having ferromagnetic properties from the components of the raw mixture obtained in the reduction reaction;
- cooling to 90 degrees Celsius or less to reduce the chemical activity of the obtained iron-containing powders in order to prevent premature oxidation due to exposure to oxidizing agents, including atmospheric oxygen.

The technical result of the invention is obtaining a technology which will be enable production of finely dispersed and nanodispersed iron-containing powders from the waste of groundwater treatment plants, with an iron content (by mass) of at least 40% of the total mass of the obtained iron-containing powder on a dry basis, having an equivalent particle diameter of not more than 100 microns for at least 90% of particles of the total number of particles. 2 tables, 2 figures

## Description

### TECHNICAL FIELD OF INVENTION

The invention relates to the production of highly dispersed metal-containing powders and can be used to produce powders of iron and its compounds from technogenic waste of groundwater treatment plants. Such technogenic waste is also known as sediments or sludge of wash water filters of iron removal plants.

The invention is applicable to the production of iron-containing powders. Iron-containing powders are widely used in the world in many different areas of industrial and economic activity. The advantages of this material include the wide distribution of available mineral raw materials for its production, as well as pronounced ferromagnetic properties and the possibility of using it as a reagent for redox reactions.

Thus, this material can be used, among other things, for the production of steels and alloys in powder form, magnetic powders and liquids, catalysts for the petrochemical industry, and many others.

### PRIOR ART

A method of producing metallic iron nanoparticles from an aqueous sol based on ferrihydrite nanoparticles is known [p. RF No. 2642220 C1, IPC C21B 15/00, publ. on 24.01.2018] (Method of producing metallic iron nanoparticles). The described invention describes the treatment of an aqueous sol based on ferrihydrite nanoparticles obtained by culturing *Klebsiella oxytoca* bacteria isolated from the sapropel of Lake Borovoye in the Krasnoyarsk Territory. This fact makes it similar to the one claimed in terms of the use of raw materials in the composition of the water-based sol, but has many significant factors that distinguish these inventions essentially. The main one is the involvement of biological processes to produce nanoparticles.

A method of producing iron alloys from production waste is known [p. RF No. 2192478 C1, IPC C21B 15/00, publ. on 10.11.2002] (Method of producing an iron alloy from production waste). The described invention describes a method of processing mill scale, which is largely similar in chemical composition to the technogenic raw materials described in the invention and comprising a high level of iron oxides, in particular Fe₂O₃. The disadvantage of this method is the use of heat treatment, which does not imply the preservation of the original particle size distribution properties of highly dispersed raw materials without alloying.

Also, iron powder produced in accordance with GOST 9849-86 "Iron powder. Specifications" (with Amendments No. 1, 2) is a well-known analogue of the material obtained by the developed technology. According to GOST, reduced iron powder with particle size 71, similarly to the claimed product, has a grain size of not more than 100 microns, with a content of fraction <45 microns of 50 to 80%. Regarding the material obtained by the claimed technology, GOST has a larger fraction range, which does not allow for precise control of fractions <20 microns. In addition, GOST implies the creation of pure iron powders with minor impurities, which excludes, in accordance with it, the possibility of producing other iron compounds, including those with a composite oxide composition.

Distinctive features of the presented invention from all known existing analogues are the use of technogenic waste from groundwater treatment plants as a raw material for the production of iron-containing metal powders, as well as stages that are different from analogues in essence and in their sequence, allowing to maintain particle size distribution and chemical compositions close to the original ones.

### SUMMARY OF THE INVENTION

The objective of this invention is to create a technology for the industrial production of highly dispersed and nanodispersed iron-containing powders, which differs from the existing technologies in greater energy efficiency and the possibility of low-waste disposal of technogenic waste from groundwater treatment stations, also known as sediments or sludge of wash water filters of iron removal plants.

The technical result of the invention is obtaining a technology which will be enable production of finely dispersed and nanodispersed iron-containing powders from the waste of groundwater treatment plants, with an iron content (by mass) of at least 40% of the total mass of the obtained iron-containing powder on a dry basis, having an equivalent particle diameter of not more than 100 microns for at least 90% of particles of the total number of particles.

The specified technical result is achieved by a method for obtaining sludge of wash water from groundwater treatment plants by separation from wash water, which consists of the following successive stages:
- dispersion of wash water sludge by treatment that ensures an equivalent particle diameter of not more than 100 microns for at least 90% of particles of the total number of particles.
- dehydration of wash water sludge from groundwater treatment plants to a relative humidity of not more than 90%;
- loading or in-line feeding of wash water sludge from groundwater treatment plants to a reaction chamber or reactor;
- reduction of iron compounds contained in wash water sludge from groundwater treatment plants in a reaction chamber or reactor in a gaseous environment having a reduction potential and consisting of at least 95% of a mixture of carbon monoxide and carbon dioxide and at 300 to 900 degrees Celsius;
- separation of particles of the target product-iron compounds having ferromagnetic properties-from the components of the raw mixture obtained in the reduction reaction;
- cooling to 90 degrees Celsius or less to reduce the chemical activity of the obtained iron-containing powders in order to prevent premature oxidation due to exposure to oxidizing agents, including atmospheric oxygen.

### BRIEF DESCRIPTION OF DRAWINGS

Fig. 1 - graphs of the possible particle size distribution of wash water sludge;
Fig. 2 - graphs of the possible particle size distribution of iron-containing powders obtained from wash water sludge.

### EMBODIMENT OF THE INVENTION

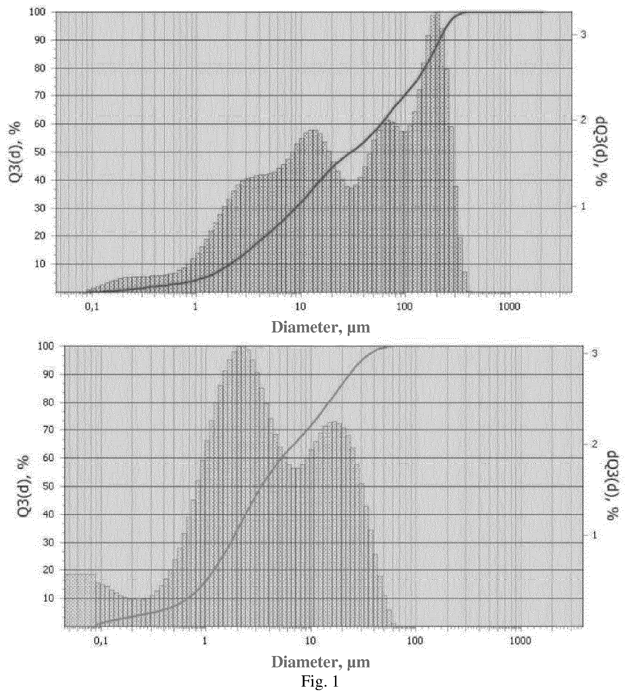

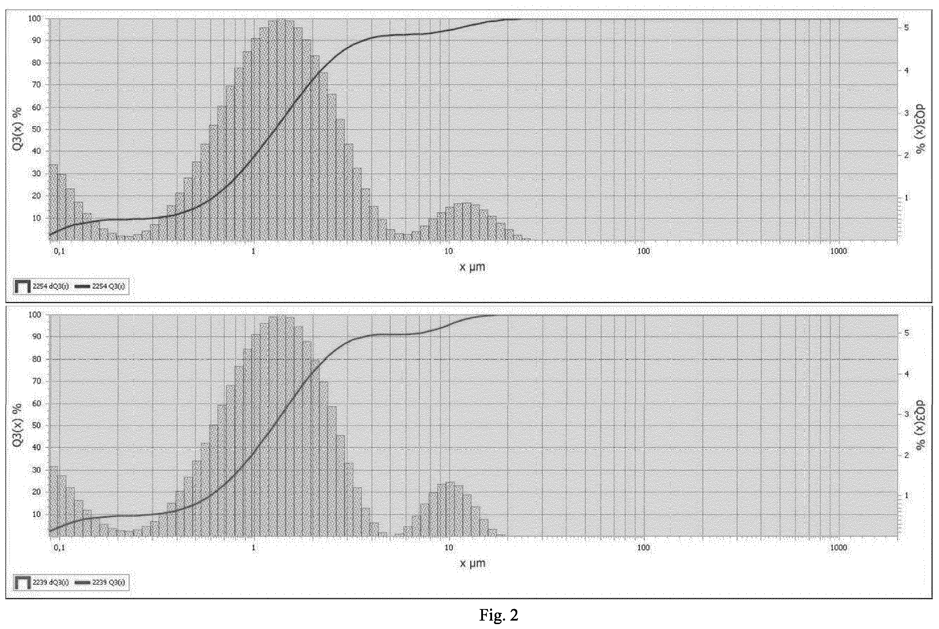

(1) The initial chemical composition of technogenic waste of groundwater treatment plants in most cases comprises 20% to 90% iron-containing compounds, which is due to the high content of iron compounds in the source groundwater and depends on the geological and hydrological characteristics of the aquifer.
(2) The initial particle size distribution of technogenic waste of groundwater treatment plants, expressed mainly by particles with an equivalent diameter of 500 microns to 100 nanometers, is due to one of the key technological processes of iron removal from groundwater-aeration. In the aeration system, the water becomes saturated with atmospheric oxygen, soluble iron compounds are oxidized and converted into an insoluble form. This process is widely used in groundwater treatment plants, which suggests the sufficient similarity and reproducibility of the technical result at various groundwater treatment facilities.
   The results of a study of technogenic waste of the Velizhansk groundwater treatment plant located in the Tyumen region are given as a particular example of the initial particle size distribution of such technogenic waste, the result of which can be extrapolated to technogenic waste from other groundwater treatment plants. Detailed information about this is presented in figures 1 and 2.
(3) According to the developed technology, the chemical reduction process occurs in a gaseous environment consisting of at least 95% of a mixture of carbon monoxide and carbon dioxide. This process occurs at temperatures that facilitate redox reactions, but prevent a significant loss of the initial particle size distribution properties of the source technogenic raw materials.

Fig. 1 shows graphs of the possible particle size distribution of wash water sludge obtained by the method of:
(A) Dry sampling from elements of technological apparatuses and constructs used in the groundwater treatment process.
(B) Separations from wash waters.

Fig. 2 shows graphs of the possible particle size distribution of iron-containing powders obtained from wash water sludge by the method of: (A) Dry sampling from elements of technological apparatuses and constructs used in the groundwater treatment process.
(B) Separations from wash waters. The results of particle size distribution analysis in the form of a set of fractions of a solid phase of technogenic waste from groundwater treatment plants, obtained as a result of the aeration process, are presented in Table 1.

**Table 1. Types of Possible Fractions of a Solid Phase of Technogenic Waste from Groundwater Treatment Plants.**

| Sample No. | Equivalent particle diameter, [µm] | | |
|---|---|---|---|
| | d10 | d50 | d90 |
| 1 | 0.16 | 1.18 | 2.52 |
| 2 | 0.16 | 1.18 | 2.52 |
| 3 | 0.15 | 1.18 | 2.53 |
| 4 | 0.16 | 1.19 | 2.56 |
| 5 | 0.19 | 1.19 | 2.60 |
| 6 | 0.21 | 1.23 | 3.01 |
| 7 | 0.25 | 1.25 | 3.16 |
| 8 | 0.30 | 1.26 | 3.30 |
| 9 | 0.31 | 1.27 | 3.45 |
| 10 | 0.31 | 1.28 | 3.58 |

where, d10, d50 and d90 represent the equivalent particle diameter in microns, lying on the upper limit of 10%, 50% and 90%, respectively, relative to the smallest particles of the total number of particles.

The presence of a fraction of particles with an equivalent diameter of 10 to 500 microns in an amount of not more than 5% of the total number of particles and particles with an equivalent diameter of less than 0.4 microns in an amount of not more than 50% of the total number of particles is also acceptable.

Also, the claimed particle size distribution of the metal powder is supplemented by the quasi-spherical shape of the initial particles of technogenic waste of groundwater treatment plants, which makes it possible to spend less energy and technological operations to bring the particles to a spherical shape required to produce some types of end products based on metal powders.

The chemical composition of technogenic waste of groundwater treatment plants may correspond to the component composition, where the components may be in the ranges indicated in Table 2.

**Table 2. Chemical Composition of a Solid Phase of Technogenic Waste from Groundwater Treatment Plants.**

| Content, % of total mass | | | | | | | | | | |
|---|---|---|---|---|---|---|---|---|---|---|
| SiO₂ | Al₂O₃ | TiO₂ | MnO | Na₂O | Fe₂O₃ | CaO | MgO | P₂O₅ | K₂O | LOI |
| 0.0 | 0.0 | 0.0 | 0.0 | 0.0 | 30.0 | 5.0 | 0.0 | 0.0 | 0.0 | 3.0 |
| 10.0 | 8.0 | 5.0 | 15.0 | 10.0 | 90.0 | 30.0 | 10.0 | 10.0 | 5.0 | 20.0 |

For the greatest degree of purification of iron-containing powders with ferromagnetic properties from impurities, it is rational to use a combination of various separation methods, including magnetic, flotation, and gravity separation.

The invention relates to a technological process for producing iron-containing powders from technogenic waste of groundwater treatment plants, having the following stages:
1. Obtaining technogenic waste of groundwater treatment plants by separation from wash water or by dry sampling from elements of technological apparatuses and constructs used in the groundwater treatment process;
2. Dispersion of technogenic waste of groundwater treatment plants by treatment (ultrasonic or another treatment) that ensures an equivalent particle diameter of not more than 100 microns for at least 90% of particles of the total number of particles;
3. Dehydration of technogenic waste of groundwater treatment plants to a relative humidity of not more than 90%;
4. Loading or in-line feeding of technogenic waste of groundwater treatment plants to a reaction chamber or reactor;
5. Reduction of iron compounds contained in technogenic waste of groundwater treatment plant in a gaseous environment having a reduction potential and consisting of at least 95% of a mixture of carbon monoxide and carbon dioxide and at 300 to 900 degrees Celsius; This will ensure that the reduction reaction proceeds to formation of other forms of oxides and other compounds of iron, as well as metallic iron, but will prevent the fusion of particles and the formation of a liquid iron alloy;
6. Separation of particles of the target product iron compounds having ferromagnetic properties from other components of the raw mixture obtained
   in the reduction reaction; This stage is necessary to increase the level of chemical purity compared to the raw material;
7. Cooling to 90 degrees Celsius or less to reduce the chemical activity of the obtained iron-containing powders in order to prevent premature oxidation due to exposure to oxidizing agents, including atmospheric oxygen.

## Claims

1. A method for producing highly dispersed iron-containing powders from technogenic waste of groundwater treatment plants, **characterized in that** it consists of the following successive stages:
- dispersion of wash water sludge by treatment that ensures an equivalent particle diameter of not more than 100 microns for at least 90% of particles of the total number of particles.
- dehydration of wash water sludge from groundwater treatment plants to a relative humidity of not more than 90%;
- loading or in-line feeding of wash water sludge from groundwater treatment plants to a reaction chamber or reactor;
- reduction of iron compounds contained in wash water sludge from groundwater treatment plants in a reaction chamber or reactor in a gaseous environment having a reduction potential and consisting of at least 95% of a mixture of carbon monoxide and carbon dioxide and at 300 to 900 degrees Celsius;
- separation of particles of the target product-iron compounds having ferromagnetic properties-from the components of the raw mixture obtained in the reduction reaction;
- cooling to 90 degrees Celsius or less to reduce the chemical activity of the obtained iron-containing powders in order to prevent premature oxidation due to exposure to oxidizing agents, including atmospheric oxygen.
